(19) Europäisches Patentamt
European Patent Office
Office européen des brevets

(11) EP 4 674 642 A1

(12) **EUROPEAN PATENT APPLICATION**
published in accordance with Art. 153(4) EPC

(43) Date of publication:
**07.01.2026 Bulletin 2026/02**

(21) Application number: **23925409.7**

(22) Date of filing: **11.12.2023**

(51) International Patent Classification (IPC):
***B60C 9/22*** *(2006.01)* ***B60C 1/00*** *(2006.01)*
***B60C 9/20*** *(2006.01)* ***C08K 3/04*** *(2006.01)*
***C08L 7/00*** *(2006.01)* ***C08L 9/06*** *(2006.01)*

(52) Cooperative Patent Classification (CPC):
**B60C 1/00; B60C 9/20; B60C 9/22; C08K 3/04; C08L 7/00; C08L 9/06**

(86) International application number:
**PCT/JP2023/044314**

(87) International publication number:
**WO 2024/180857 (06.09.2024 Gazette 2024/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.03.2023 JP 2023030762**

(71) Applicant: **BRIDGESTONE CORPORATION**
**Chuo-ku**
**Tokyo 104-8340 (JP)**

(72) Inventors:
- **KAWASHIMA, Keisuke**
  **Tokyo 104-8340 (JP)**
- **AMIYA, Motoki**
  **Tokyo 104-8340 (JP)**

(74) Representative: **Marks & Clerk LLP**
**15 Fetter Lane**
**London EC4A 1BW (GB)**

(54) **TIRE**

(57) Provided is a tire having low rolling resistance and reduced pass-by noise. A tire 10 includes: in a tread part 11, at least one belt layer 2; and at least one belt-reinforcing layer 3 arranged outside in the tire radial direction of the belt layer 2. The belt-reinforcing layer is formed by coating, with coating rubber, reinforcing cords aligned such that the direction of the cords is substantially aligned to the tire circumferential direction and has a value of circumferential stiffness S per unit width of 100 mm of the belt-reinforcing layer defined by Equation (1) below of 250 or more and 400 or less, and the coating rubber has a storage elastic modulus E' measured under the conditions of a temperature of 24°C, an amplitude of ±1%, and a frequency of 52 Hz of 6.0 MPa or less,

$$S = sc \times N \qquad (1),$$

wherein
sc is the cord stiffness (mN/(dtex·%)) of the reinforcing cords in the belt-reinforcing layer under the conditions of a temperature of 24°C and humidity of 55%, and
N is the number (cords/100 mm) of the reinforcing cords embedded in the belt-reinforcing layer.

FIG. 1

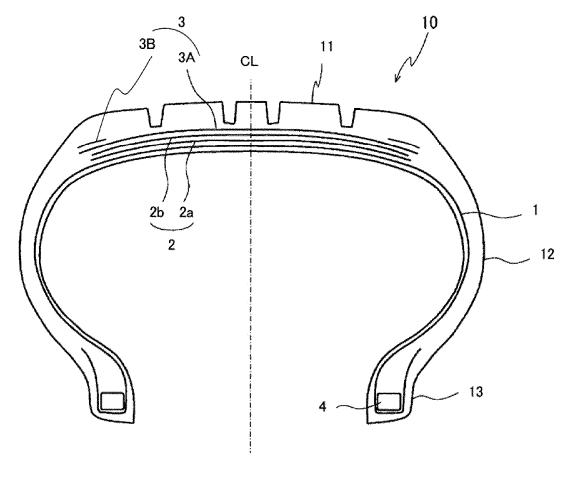


EP 4 674 642 A1

**Description**

TECHNICAL FIELD

The present invention relates to tires, specifically relates to passenger car tires concerning improvement of a belt-reinforcing layer reinforcing a tread surface part, and particularly relates to passenger pneumatic car tires.

BACKGROUND ART

In general, pneumatic tires, such as passenger car tires, have a basic structure in which a carcass extending in a toroidal shape across a pair of bead parts serves as a skeleton, and a tread surface part is reinforced by two or more belt layers arranged so that the directions of the cords intersect with each other between the layers. Further, one or more belt-reinforcing layers arranged such that the direction of cords is substantially aligned to the tire circumferential direction can be provided outside in the tire radial direction of the belt layers.

In recent years, as reinforcing cords of such a belt-reinforcing layer, polyethylene terephthalate (PET) fibers, which are lower in cost and have higher elasticity compared to nylon fibers, have been used to improve various performances and reduce tire costs (see, for example, Patent Document 1).

RELATED ART DOCUMENT

PATENT DOCUMENT

Patent Document 1: JP 2005-112065 A (JP 4397207 B)

SUMMARY OF THE INVENTION

PROBLEMS TO BE SOLVED BY THE INVENTION

By applying PET fibers as the reinforcing cords in the belt-reinforcing layer, the belt-reinforcing layer can increase the elasticity and reduce the rolling resistance of tires. However, on the other hand, there has been a problem of worsening high-frequency noise, i.e., pass-by noise in running. In the tire disclosed in Patent Document 1, a problem with the pass-by noise has not been examined.

Thus, it is an object of the present invention to provide a tire having low rolling resistance and reduced pass-by noise.

MEANS FOR SOLVING THE PROBLEMS

As a result of extensive studies by the present inventors, the present inventors have found that the above-described problem can be solved by forming the belt-reinforcing layer such that the physical properties satisfy predetermined conditions, and thus have completed the present invention. More specifically, the present invention is as follows.

(1) A tire includes: in a tread part, at least one belt layer; and at least one belt-reinforcing layer arranged outside in the tire radial direction of the belt layer, in which

the belt-reinforcing layer is formed by coating, with coating rubber, reinforcing cords aligned such that the direction of the cords is substantially aligned to the tire circumferential direction and has a value of circumferential stiffness S per unit width of 100 mm of the belt-reinforcing layer defined by Equation (1) below of 250 or more and 400 or less, and

the coating rubber has a storage elastic modulus E' measured under the conditions of a temperature of 24°C, an amplitude of ±1%, and a frequency of 52 Hz of 6.0 MPa or less,

$$S = sc \times N \qquad (1),$$

wherein

sc is the cord stiffness (mN/(dtex·%)) of the reinforcing cords in the belt-reinforcing layer under the conditions of a temperature of 24°C and humidity of 55%, and

N is the number (cords/100 mm) of the reinforcing cords embedded in the belt-reinforcing layer.
Thus, a tire can be realized which has low rolling resistance and reduced pass-by noise.

(2) The tire according to (1), in which the value of a loss index L of the coating rubber contained per unit width of 100 mm of the belt-reinforcing layer defined by Equation (2) below is 4.00 or less,

$$L = \tan\delta \times ((100 \times D) - \pi(D/2)^2 \times N) \qquad (2),$$

wherein

tan δ is the value of the loss tangent of the coating rubber measured under the conditions of a temperature of 24°C, initial strain of 6%, an amplitude of ±1%, and a frequency of 52 Hz,
D is the diameter (mm) of a circumcircle of the reinforcing cord, and
N is the number (cords/100 mm) of the reinforcing cords embedded in the belt-reinforcing layer.

Thus, the rolling resistance can be reduced, and the effects of the present invention can be more satisfactorily obtained.
(3) The tire according to (1) or (2), in which a rubber composition used for the coating rubber contains natural rubber and styrene butadiene rubber as a rubber component and contains the natural rubber in the proportion of 70 parts by mass or more in 100 parts by mass of the rubber component.
Thus, the storage elastic modulus E' of the rubber composition can be suppressed, and the effect of reducing the pass-by noise can be further improved.
(4) The tire according to (3), in which the styrene butadiene rubber is non-oil-extended styrene butadiene rubber.
Thus, the tan δ (24°C) of the rubber composition can be suppressed, and the effect of reducing the rolling resistance can be further improved.
(5) The tire according to any one of (1) to (4), in which the rubber composition used for the coating rubber contains carbon black in the proportion of 30 to 60 parts by mass based on 100 parts by mass of the rubber component, and the carbon black has a nitrogen adsorption specific surface area ($N_2SA$) of 40 $m^2/g$ or less.
Thus, the storage elastic modulus E' of the rubber composition can be suppressed, and the effect of reducing the pass-by noise can be further improved.
(6) The tire according to any one of (1) to (5), in which the rubber composition used for the coating rubber does not contain an oil content derived from a polymer.
Thus, the tan δ (24°C) of the rubber composition can be suppressed, and the effect of reducing the rolling resistance can be further improved.
(7) The tire according to any one of (1) to (6), in which the oil content in the rubber composition used for the coating rubber is 0.2% by mass or less.
Thus, the tan δ (24°C) of the rubber composition can be suppressed, and the effect of reducing the rolling resistance can be further improved.
(8) The tire according to any one of (1) to (7), in which the reinforcing cord contains polyethylene terephthalate fibers.

Thus, the belt-reinforcing layer can be increased in elasticity, and the rolling resistance of the tire can be further reduced.

EFFECTS OF THE INVENTION

According to the present invention, the above-described configuration has made it possible to realize a tire having low rolling resistance and reduced pass-by noise.

BRIEF DESCRIPTION OF THE DRAWINGS

[FIG.1] FIG. 1 is a lateral cross-sectional view illustrating a passenger car tire which is one example of the present invention.
[FIG. 2] FIG. 2 is an explanatory diagram relating to the regulations of the cross-sectional area of coating rubber contained per unit width of 100 mm of a belt-reinforcing layer.
[FIG. 3] FIG. 3 is a schematic view for explaining a method for calculating the elastic modulus at a 7% elongation of a

cord.

MODE FOR CARRYING OUT THE INVENTION

Hereinafter, embodiments of the present invention are described in detail with reference to the drawings.

The compounds and materials disclosed herein may be partially or completely derived from fossil resources, biological resources such as plant resources, or recyclable resources such as end-of-life tires. They may also be derived from mixtures of two or more of fossil resources, biological resources and recyclable resources.

FIG. 1 is a lateral cross-sectional view illustrating one example of a tire of the present invention. CL in the figure indicates the tire center line. A tire 10 illustrated in the figure is a passenger car tire and includes a tread part 11 formed in an annular shape and a pair of sidewall parts 12 and bead parts 13 sequentially arranged inside in the tire radial direction. The tire 10 illustrated in the figure has a carcass 1 extending in a toroidal shape across the pair of bead parts 13 as a skeleton, and includes at least one belt layer 2 outside in the tire radial direction of the carcass 1 in the tread part and at least one belt-reinforcing layer 3 arranged outside in the tire radial direction.

The belt-reinforcing layer 3 among the above contains a circumferential belt formed by coating, with coating rubber, reinforcing cords aligned such that the direction of the cords is substantially aligned to the tire circumferential direction. In the tire of the present invention, it is important that the belt-reinforcing layer 3 satisfies the following conditions.

More specifically, in the tire of the present invention, the value of circumferential stiffness S per unit width of 100 mm of the belt-reinforcing layer 3 defined by Equation (1) below is 250 or more and 400 or less, and a storage elastic modulus E' of the coating rubber of the belt-reinforcing layer 3 measured under the conditions of a temperature of 24°C, an amplitude of ±1%, and a frequency of 52 Hz is 6.0 MPa or less,

$$S = sc \times N \qquad (1).$$

In Equation (1), sc is the cord stiffness (mN/(dtex·%)) of the reinforcing cords in the belt-reinforcing layer 3 under the conditions of a temperature of 24°C and humidity of 55% and N is the number (cords/100 mm) of the reinforcing cords embedded in the belt-reinforcing layer 3.

Herein, Equation (1) defines the value of the circumferential stiffness S per unit width of 100 mm of the belt-reinforcing layer 3 as a value obtained by multiplying the cord stiffness per reinforcing cord of the belt-reinforcing layer 3 by the number of the reinforcing cords contained in the unit width of 100 mm. Since the stiffness is significantly different between the reinforcing cords and the coating rubber, the present invention defines the circumferential stiffness of the belt-reinforcing layer 3 using the cord stiffness of the reinforcing cords.

The present invention has made it possible to realize a tire in which the worsening of pass-by noise is suppressed while the rolling resistance is reduced by setting the stiffness of the above-described belt-reinforcing layer 3 in an appropriate range provided that the value of the circumferential stiffness S per unit width of the above-described belt-reinforcing layer 3 and the value of the storage elastic modulus E' of the coating rubber of the above-described belt-reinforcing layer 3 satisfy the above-described conditions.

The value of the circumferential stiffness S per unit width of 100 mm of the above-described belt-reinforcing layer 3 is required to be 250 or more and 400 or less, and preferably 280 or more and 350 or less. When the value of the above-described circumferential stiffness S is less than 250, satisfactory low rolling resistance cannot be obtained. When the value of the above-described circumferential stiffness S exceeds 400, the pass-by noise is not sufficiently reduced.

Herein, the sc (mN/(dtex·%)) as the cord stiffness of the reinforcing cords in the belt-reinforcing layer 3 in Equation (1) above can be specifically measured as follows. More specifically, a tensile test of the reinforcing cords is carried out under the conditions of a gripping distance of 250 mm and a tensile speed of 300 ± 20 mm/min in accordance with the "Chemical Fiber Tire Cord Testing Method" specified in JIS-L1017 under a measurement environment of a temperature of 24°C and humidity of 55%. The mean value of inclinations in a 1 to 2% elongation in a load-elongation curve can be determined as the cord stiffness (mN/%). As a value obtained by further dividing the cord stiffness by the fineness (dtex) of the reinforcing cords, the value of the sc (mN/(dtex·%)) can be determined.

The value of the storage elastic modulus E' of the coating rubber of the above-described belt-reinforcing layer 3 is a value measured under the conditions of a temperature of 24°C, an amplitude of ±1%, and a frequency of 52 Hz, and is required to be 6.0 MPa or less, and preferably 5.0 MPa or more and 5.5 MPa or less. When the above-described storage elastic modulus E' exceeds 6.0 MPa, the pass-by noise is not sufficiently reduced.

In the tire of the present invention, the value of a loss index L of the coating rubber contained per unit width of 100 mm of the belt-reinforcing layer 3 defined by Equation (2) below is preferably 4.00 or less. Herein, the width of the belt-reinforcing layer 3 means the width of the belt-reinforcing layer 3 measured in the tire width direction along the belt-reinforcing layer 3,

$$L = \tan\delta \times ((100 \times D) - \pi(D/2)^2 \times N) \qquad (2).$$

In Equation (2), tan δ is the value of the loss tangent of the coating rubber of the belt-reinforcing layer 3 measured under the conditions of a temperature of 24°C, initial strain of 6%, an amplitude of ±1%, and a frequency of 52 Hz, D is the diameter (mm) of a circumcircle of the reinforcing cords in the belt-reinforcing layer 3, and N is the number (cords/100 mm) of the reinforcing cords embedded in the belt-reinforcing layer 3.

FIG. 2 illustrates an explanatory diagram relating to the regulations of the cross-sectional area of the coating rubber contained per width of 100 mm of the belt-reinforcing layer 3. The belt-reinforcing layer 3 illustrated in FIG. 2 is formed by coating the reinforcing cords 31 aligned in one direction with coating rubber 32. Herein, the "aligned in one direction" means a range including manufacturing errors. In FIG. 2, the cross-sectional area per unit width of 100 mm of the belt-reinforcing layer 3 is illustrated as a portion surrounded by the dotted lines, and the cross-sectional area of the coating rubber 32 occupied in the belt-reinforcing layer 3 is illustrated by the hatched lines.

More specifically, Equation (2) defines the value of the loss index L of the coating rubber of the belt-reinforcing layer 3 as a value obtained by multiplying the value of the loss tangent tan δ (24°C) of the coating rubber 32 of the belt-reinforcing layer 3 by the cross-sectional area of the coating rubber 32 contained per unit width of 100 mm of the belt-reinforcing layer 3. The lower the tan δ (24°C) of the coating rubber 32 and the smaller the cross-sectional area of the coating rubber 32, the lower the rolling resistance.

The value of the loss index L of the coating rubber of the above-described belt-reinforcing layer 3 of 4.00 or less is preferable because the rolling resistance can be reduced and the effects of the present invention can be satisfactorily obtained. The value of the loss index L of the coating rubber of the above-described belt-reinforcing layer 3 is preferably 4.00 or less and more preferably 2.5 or more and 3.5 or less.

In the present invention, the belt-reinforcing layer 3 is not particularly limited in the specific configuration insofar as the conditions concerning the above-described physical properties are satisfied. For example, the following materials can be used.

Rubber components of the rubber composition used for the coating rubber of the belt-reinforcing layer 3 are not particularly limited, and various elastomers can be applied. Usable as such elastomers are rubbers, such as: diene rubbers, such as natural rubber (NR), isoprene rubber (IR), epoxidized natural rubber, styrene butadiene rubber (SBR), butadiene rubber (BR, high-cis BR and low-cis BR), nitrile rubber (NBR), hydrogenated NBR, and hydrogenated SBR and hydrogenated products thereof; olefin rubbers, such as ethylene-propylene rubber (EPDM, EPM), maleic acid modified ethylene-propylene rubber (M-EPM), butyl rubber (IIR), a copolymer of isobutylene and aromatic vinyl or diene monomer, acrylic rubber (ACM), and ionomer; halogen-containing rubbers, such as Br-IIR, Cl-IIR, bromide of isobutylene-paramethyl styrene copolymer (Br-IPMS), chloroprene rubber (CR), hydrin rubber (CHR), chlorosulfonated polyethylene rubber (CSM), chlorinated polyethylene rubber (CM), and maleic acid-modified chlorinated polyethylene rubber (M-CM); silicone rubbers, such as methyl vinyl silicone rubber, dimethyl silicone rubber, and methyl phenyl vinyl silicone rubber; sulfur-containing rubbers, such as polysulfide rubber; fluororubbers, such as vinylidene fluoride rubber, fluorine-containing vinyl ether rubber, tetrafluoroethylene-propylene rubber, fluorine-containing silicone rubber, and fluorine-containing phosphazene rubber; and thermoplastic elastomers, such as styrene elastomers, olefin elastomers, ester elastomers, urethane elastomers, and polyamide elastomers.

In the present invention, it is preferable that the rubber component of the rubber composition used for the coating rubber of the belt-reinforcing layer 3 contains natural rubber and styrene butadiene rubber and contains 70 parts by mass or more of natural rubber in 100 parts by mass of the rubber component. Thus, the storage elastic modulus E' of the rubber composition can be suppressed, and the effect of reducing the pass-by noise can be obtained. The content of the natural rubber in the rubber composition used for the coating rubber of the above-described belt-reinforcing layer 3 is more preferably 70 parts by mass or more and 90 parts by mass or less in 100 parts by mass of the rubber component. The above-described natural rubber may be modified natural rubber. In the case of the modified natural rubber, modified natural rubber having a nitrogen content of 0.1 to 0.3% by mass is preferable, for example. The above-described modified natural rubber is preferably one from which proteins have been removed by a centrifugation process, enzyme treatment, or urea treatment. The above-described modified natural rubber preferably has a phosphorus content of more than 200 ppm and 900 ppm or less.

In the present invention, a non-oil-extended styrene butadiene rubber is preferably used as the styrene butadiene rubber. Thus, the tan δ (24°C) of the rubber composition can be suppressed, and the effect of reducing the rolling resistance can be obtained.

Further, in the present invention, the rubber composition used for the coating rubber of the belt-reinforcing layer 3 preferably contains 30 to 60 parts by mass of carbon black having a nitrogen adsorption specific surface area ($N_2SA$) of 40 $m^2/g$ or less based on 100 parts by mass of the rubber component. Thus, the storage elastic modulus E' of the rubber composition can be suppressed, and the effect of reducing the pass-by noise can be obtained.

The nitrogen adsorption specific surface area ($N_2SA$) of the above-described carbon black is preferably 40 $m^2/g$

or less, more preferably 34 $m^2/g$ or less, and particularly preferably 30 $m^2/g$ or less. The nitrogen adsorption specific surface area ($N_2SA$) of the above-described carbon black can be set to 25 $m^2/g$ or more. The content of the above-described carbon black is preferably 30 to 60 parts by mass and more preferably 40 to 50 parts by mass based on 100 parts by mass of the rubber component. The above-described carbon black may be recycled carbon black. Herein, the "recycled carbon black " refers to carbon black obtained by being recovered from raw materials as recycled waste. The above-described recycled wastes include rubber products (particularly vulcanized rubber products) containing carbon black typified by used rubber and used tires, waste oil, and the like. The "recycled carbon black " is different from carbon black, in which hydrocarbons of oil, natural gas, and the like are directly manufactured from raw materials, i.e., carbon black that is not a recycled product. The "used" as used herein includes not only substances that were actually used and then discarded but substances that were manufactured but not actually used and then discarded.

To the rubber composition used for the coating rubber of the belt-reinforcing layer 3, anti-aging agent, zinc oxide (zinc white), stearic acid, and the like, which are commonly used in rubber products, such as tires, can be appropriately compounded in addition to carbon black, sulfur, and vulcanization accelerators. Herein, the compounding amount of zinc white in the above-described rubber composition is preferably more than 3 parts by mass and less than 5 parts by mass based on 100 parts by mass of the rubber component. The compounding amount of zinc white of 5 parts by mass or more poses a risk of causing aggregation and deteriorating dispersibility. The compounding amount of zinc white of 3 parts by mass or less poses a risk of adversely affecting a vulcanization reaction.

In the present invention, the rubber composition used for the coating rubber of the belt-reinforcing layer 3 preferably does not contain an oil content derived from a polymer. Herein, the "not containing an oil content derived from a polymer" means not containing an oil content, which is indirectly compounded in the rubber composition as a component contained in polymers, such as the above-described rubber component. By setting the content of the oil content derived from a polymer in the rubber composition used for the coating rubber of the belt-reinforcing layer 3 to zero, the tan $\delta$ (24°C) of the rubber composition can be suppressed, and the effect of reducing the rolling resistance can be obtained. More preferably, the oil content in the rubber composition used for the coating rubber of the belt-reinforcing layer 3 is set to 0.2% by mass or less. Thus, the tan $\delta$ (24°C) of the rubber composition can be further suppressed, and the effect of reducing the rolling resistance can be further improved.

Further, in the present invention, the rubber composition used in the coating rubber for the belt-reinforcing layer 3 preferably has the tan $\delta$ measured under the conditions of a temperature of 60°C, initial strain of 1.5%, an amplitude of $\pm$1%, and a frequency 52 Hz of 0.07 or less.

As the reinforcing cords in the belt-reinforcing layer 3, organic fiber cords can be used. Materials of the organic fiber cords include, but are not particularly limited to, polyesters, such as polyethylene terephthalate (PET) and polyethylene naphthalate (PEN), nylons (aliphatic polyamides), such as 6-nylon, 6,6-nylon, and 4,6-nylon, celluloses, such as rayon and lyocell, and the like. Among the above, PET fibers having stiffness higher than that of nylon cords and the like are preferable. The use of the PET fibers as the reinforcing cords in the belt-reinforcing layer 3 can increase the elasticity of the belt-reinforcing layer 3 and can reduce the rolling resistance of tires.

In the above-described organic fiber cords, the elastic modulus under a 29.4 N load measured at 160°C is preferably 2.0 mN/(dtex·%) or more and more preferably 2.5 mN/(dtex·%) or more and 4.5 mN/(dtex·%) or less. Herein, the elastic modulus under the 29.4 N load measured at 160°C is calculated by converting the inclination (N/%) of the tangent at the point corresponding to the 29.4 N load of the load-elongation curve of the cords measured at 160°C into a value per dtex.

The reason why the elastic modulus is measured at 160°C is that the temperature inside the tire rises as a car runs at higher speed, and the temperature of the belt-reinforcing layer 3 has reached 160°C at the point of time when the tire is damaged due to the high-speed running. In particular, even when the PET cord is a cord showing a greater decrease in elastic modulus at high temperatures as compared with that at room temperature and having high elasticity at room temperature, the PET cord cannot exhibit a sufficient belt reinforcing effect, i.e., an effect of improving durability against projection input and an effect of suppressing belt protrusion, unless the high elastic modulus can be maintained at high temperatures, and therefore the elastic modulus at high temperatures is of great significance. By setting the elastic modulus of the cords under the 29.4 N load measured at 160°C to 2.0 mN/(dtex·%) or more, the plunger durability of the tire can be improved, the belt protrusion amount in high-speed running can be suppressed, and stresses in treading-in and treading-out of the tire can be reduced, so that the control stability of the tire in high-speed running can be improved.

To improve the elastic modulus at 160°C of the above-described organic fiber cords, dip treatment is preferably performed under high tension. As a result of an examination performed by adjusting the tension applied to the cords in the dip treatment, producing organic fiber cords having various elastic moduli, coating the obtained dipped cords with an elastomer, and applying the resultant cords to a belt-reinforcing layer, it has been found that the plunger durability and the control stability of the tire are significantly improved when the elastic modulus under the 29.4 N load of the cords measured at 160°C is in the range of 2.0 mN/(dtex·%) or more.

Herein, to sufficiently increase the elasticity of the reinforcing cords, the tension in performing adhesive treatment to the organic fiber cords is preferably set to $6.9 \times 10^{-2}$ N/tex or more. However, a method for increasing the elasticity of the

cords is not limited thereto, and other methods, such as lowering twisting of cords, may be acceptable. The adhesive treatment includes dry treatment, hot treatment, normalizing treatment, and the like, and is performed while the temperature and the time are being adjusted as appropriate besides the tension. In the present invention, the adhesive treatment may be performed by either one-bath treatment or two-bath treatment, but is preferably performed by two-bath treatment, and a tension of $6.9 \times 10^{-2}$ N/tex or more is preferably applied to the organic fiber cords in two-bath hot treatment.

The above-described organic fiber cords preferably have a breaking strength of 6.5 cN/dtex or more, a breaking elongation of 10% or more, and an elastic modulus at a 7% elongation of 6.0 mN/(dtex·%) or more. Herein, the breaking strength, the breaking elongation, and the elastic modulus at the 7% elongation of the organic fiber cords are values measured at room temperature (23°C). The physical properties of the organic fiber cords can be measured in accordance with JIS L 1013 "Testing methods for man-made filament yarns".

The elastic modulus at the 7% elongation is calculated by converting the inclination (N/%) of the tangent at the point corresponding to the 7% elongation of the load-elongation curve of the cords into a value per dtex. The inclination of the tangent at the point corresponding to the 7% elongation of the load-elongation curve means the inclination of a tangent S at the point corresponding to the 7% elongation of a load-elongation curve C of the cords illustrated in FIG. 3.

The organic fiber cords having a breaking strength of 6.5 cN/dtex or more, a breaking elongation of 10% or more, and an elastic modulus at the 7% elongation of 6.0 mN/(dtex·%) or more have high strength in breaking, large elongation in breaking, and a high elastic modulus at the 7% elongation, and therefore can improve the plunger durability and the control stability of the tire.

The above-described organic fiber cords preferably have a twist factor $\alpha$ represented by Equation (3) below of 500 to 2500. When the twist factor $\alpha$ is 500 or more, the binding force of filaments becomes strong, and sufficient adhesion is obtained. When the twist factor $\alpha$ is 2500 or less, the elastic modulus sufficient for obtaining the effect of improving the durability against projection input and the effect of suppressing the belt protrusion can be exhibited,

$$\alpha = T \times d^{1/2} \cdots (3).$$

In Equation (3), T is the number of twists (twists/100 mm) of the organic fiber cords, and d is the total fineness (dtex) of the organic fiber cords.

The above-described organic fiber cords preferably have total fineness of 1000 to 3500 dtex. When the total fineness of the organic fiber cords is 1000 dtex or more, the elastic modulus sufficient for obtaining the effect of improving the durability against projection input and the effect of suppressing the belt protrusion can be exhibited. When the total fineness of the organic fiber cords is 3500 dtex or less, the cords can be densely embedded, and the stiffness per unit width can be sufficiently ensured.

A raw tire expands by a few percent in the tire radial direction in vulcanization. Therefore, when the elastic modulus of the reinforcing cords used for the belt-reinforcing layer 3 is high, the reinforcing cords cannot follow the expansion of the tire in vulcanization molding, posing a possibility that the organic fiber cords as the reinforcing cords in the belt-reinforcing layer 3 and the belt cords in the belt layer 2 come into direct contact with each other without the coating rubber. Therefore, it is preferable to design the diameter of the raw tire to a certain size in advance and to adjust the tension in winding the reinforcing cords coated with the coating rubber to form the belt-reinforcing layer 3, thereby sufficiently ensuring a gauge between the cords of the belt layer 2 and the belt-reinforcing layer 3. From such a point, the above-described organic fiber cords preferably have a cord elongation rate in the tire after vulcanization to the original cord length before vulcanization of 2% or less. When a tire is molded with the cord elongation rate of 2% or less, the contact between the organic fiber cords and the belt cords can be suppressed, thereby suppressing the occurrence of separation at the belt end during running.

Raw materials of the above-described organic fiber cords are not particularly limited, and may be derived from synthetic products, may be derived from biological products, may be derived from mechanically recycled products obtained by crushing, melting, and re-spinning PET products, such as PET bottles, or may be derived from chemically recycled products obtained by depolymerizing and repolymerizing PET products, such as PET bottles.

The structure of the organic fiber cords is not particularly limited, and may be a single twisted structure or a twisted structure (such as a double twisted structure). Cords having a single twisted structure can be obtained as twisted yarn cords by aligning raw yarns and twisting the aligned raw yarns in one direction, for example. Cords having the double twisted structure can be obtained as twisted yarn cords by applying first twist to raw yarns, combining two or more of the first-twisted raw yarns, and applying final twist in the opposite direction, for example.

The above-described organic fiber cords, particularly the PET cords, are preferably treated with an adhesive composition containing a thermoplastic polymer (A), a thermally reactive water-based urethane resin (B), and an epoxy compound (C) or an adhesive composition containing rubber latex (D) in addition to the components (A) to (C), in which the main chain of the (A) component does not substantially have an addition-reactive carbon-carbon double bond and the (A)

component has at least one functional group having cross-linking properties as a pendant group. The adhesive treatment with such an adhesive composition can improve the adhesiveness between the cords and the coating rubber under high temperatures.

Conventionally, as the adhesive treatment of the organic fiber cords, particularly the PET cords, so-called two-bath treatment is performed in which epoxy or isocyanate is applied to the cord surfaces, and then the cords are treated with resin (RFL resin) obtained by mixing resorcinol, formaldehyde, and latex from above. However, such a means makes resin used for one bath very hard, increases the strain input into the cords, and lowers the fatigue resistance of the cords in some cases. Although such resin can exhibit sufficient adhesive strength between the cords and the elastomer at room temperature, the adhesive strength sometimes drastically decreases at high temperatures of 130°C or higher. In contrast thereto, by the use of a one-bath mixed liquid in which the thermoplastic polymer (A) having at least one functional group having cross-linking properties as the pendant group and does not substantially contain an addition-reactive carbon-carbon double bond in the main chain structure, the thermally reactive water-based urethane resin (B), and the epoxy compound (C) are mixed, the adhesion to the coating rubber can be sufficiently ensued even at high temperatures of 180°C or higher without hardening the cord.

The main chain of the thermoplastic polymer (A) mainly has a linear structure. As the main chain, ethylenic addition polymers, such as acrylic polymers, vinyl acetate polymers, or vinyl acetate-ethylene polymers, or urethane-based high molecular weight polymers, are preferable, for example. However, the thermoplastic polymer (A) may have a function of suppressing resin fluidity at high temperatures and ensuring the fracture strength of the resin by the crosslinking of the functional groups of the pendant groups, and is not limited to the ethylenic addition polymers and the urethane-based high molecular weight polymers.

The functional group of the pendant group of the thermoplastic polymer (A) is preferably an oxazolinyl group, a bismaleimide group, a (blocked) isocyanate group, an aziridine group, a carbodiimide group, a hydrazino group, an epoxy group, an epithio group, or the like.

Monomers constituting the ethylenic addition polymers include ethylenically unsaturated monomers having one carbon-carbon double bond and monomers containing two or more carbon-carbon double bonds. Among the above, the ethylenically unsaturated monomers having one carbon-carbon double bond include α-olefins, such as ethylene, propylene, butylene, and isobutylene; α,β-unsaturated aromatic monomers, such as styrene, α-methyl styrene, monochloro styrene, vinyl toluene, vinyl naphthalene, and sodium styrenesulfonate; ethylenic carboxylic acids, such as itaconic acid, fumaric acid, maleic acid, acrylic acid, methacrylic acid, and butene tricarboxylic acid and salts thereof; acid anhydrides, such as maleic anhydride and itaconic anhydride; esters of unsaturated carboxylic acids, such as methyl (meth)acrylate, ethyl (meth)acrylate, butyl (meth)acrylate, 2-ethylhexyl (meth)acrylate, methoxypolyethylene glycol (meth)acrylate, 2-hydroxyethyl (meth)acrylate, and 2-aminoethyl (meth)acrylate; monoesters of ethylenic dicarboxylic acids, such as itaconic acid monoethyl ester, fumaric acid monobutyl ester, and maleic acid monobutyl ester; diesters of ethylenic dicarboxylic acids, such as itaconic acid diethyl ester and fumaric acid dibutyl ester; amides of α,β-ethylenically unsaturated acids, such as acrylamide, maleic acid amide, N-methylol acrylamide, N-(2-hydroxyethyl) acrylamide, methacrylamide, N-methylol methacrylamide, N-(2-hydroxyethyl) methacrylamide, and maleic acid amide; hydroxyl group containing monomers, such as 2-hydroxyethyl (meth)acrylate and polyethylene glycol mono(meth)acrylate; unsaturated nitriles, such as acrylonitrile, methacrylonitrile, fumaronitrile, and α-chloroacrylonitrile; vinyl ethers, such as methyl vinyl ether and ethyl vinyl ether; vinyl ketones; vinyl amides; halogen-containing α,β-unsaturated monomers, such as vinyl chloride, vinylidene chloride, vinyl fluoride, and vinylidene fluoride; vinyl compounds, such as vinyl acetate, vinyl valerate, vinyl caprylate, and vinyl pyridine; addition-polymerizable oxazolines, such as 2-isopropenyl-2-oxazoline; heterocyclic vinyl compounds, such as vinylpyrrolidone; and unsaturated bond-containing silane compounds, such as vinylethoxysilane and α-methacryloxypropyltrimethoxysilane. These substances may be used alone or in combination of two or more types thereof. In the present invention, the thermoplastic polymer (A) is preferably obtained by radical addition polymerization of these monomers. Monomers constituting the main chain structure and containing two or more carbon-carbon double bonds include conjugated diene monomers, such as halogen-substituted butadiene, e.g., 1,3-butadiene, 2-methyl-1,3-butadiene, 2,3-dimethyl-1,3-butadiene, and chloroprene, for example. Non-conjugated diene monomers include non-conjugated diene monomers, such as vinylnorbornene, dicyclopentadiene, and 1,4-hexadiene. These monomers may be used alone or in combination of two or more types thereof.

The ethylenic addition polymers contain units derived from ethylenically unsaturated monomers having one carbon-carbon double bond and monomers containing two or more carbon-carbon double bonds and have sulfur-reactive carbon-carbon double bonds in the proportion of preferably 10 mol% or less and more preferably 0 mol% in terms of monomer composition ratio based on the total monomer charge amount.

A method for introducing functional groups having cross-linking properties into the ethylenic addition polymers to form the thermoplastic polymer (A) is not particularly limited. For example, a method can be adopted in which addition polymerizable monomers having oxazoline, addition polymerizable monomers having an epoxy group, addition polymerizable monomers having maleimide, addition polymerizable monomers having a blocked isocyanate group, addition polymerizable monomers having an epithio group, and the like are copolymerized when the ethylenic addition polymers

are polymerized and the like.

The urethane-based high molecular weight polymers are mainly high molecular weight polymers having, in the molecule, a large number of bonds resulting from a reaction between an isocyanate group and active hydrogen, such as a urethane bond and a urea bond, obtained by a polyaddition reaction between polyisocyanate and compounds having two or more active hydrogens. Polymers may also be acceptable which contain not only the bond resulting from the reaction between an isocyanate group and active hydrogen but an ester bond, an ether bond, and an amide bond contained in active hydrogen compound molecules and uretdione and carbodiimide generated by a reaction between isocyanate groups, and the like.

The thermally reactive water-based urethane resin (B) is preferably resin having two or more thermally dissociable blocked isocyanate groups in one molecule. For example, thermally reactive water-based polyurethane compounds represented by General Formula (4) below are particularly preferable.

$$[(YCONH)_p-\overset{(NHCOZ)_m}{\overset{|}{A}}-NHCO]_n\ X \quad \cdots \quad (4)$$

**In** Formula (4), A represents an isocyanate residue of an organic polyisocyanate compound having 3 to 5 functional groups, Y represents an active hydrogen residue of a blocking agent compound liberating an isocyanate group by heat treatment, Z represents an active hydrogen residue of a compound having at least one active hydrogen atom and at least one anion-forming group in the molecule, X is an active hydrogen residue of a polyol compound having 2 to 4 hydroxyl groups and an average molecular weight of 5000 or less, n is an integer from 2 to 4, and p + m is an integer from 2 to 4 ($m \geqq 0.25$).

The epoxy compound (C) may be a compound containing two or more, preferably four or more, epoxy groups in one molecule, and is preferably an epoxy group-containing compound and a reaction product of polyhydric alcohols and epichlorohydrin. Specific examples of the epoxy compound include reaction products of polyhydric alcohols and epichlorohydrin, such as diethylene glycol·diglycidyl ether, polyethylene glycol·diglycidyl ether, polypropylene glycol·diglycidyl ether, neopentyl glycol·diglycidyl ether, 1,6-hexanediol·diglycidyl ether, glycerol·polyglycidyl ether, trimethylolpropane·polyglycidyl ether, polyglycerol·polyglycidyl ether, pentaerythritol·polyglycidyl ether, diglycerol·polyglycidyl ether, and sorbitol-polyglycidyl ether; novolac epoxy resins, such as phenol novolac epoxy resins and cresol novolac epoxy resins; and bisphenol A epoxy resins, and the like.

The rubber latex (D) is preferably vinylpyridine-styrene-butadiene copolymerized latex, styrene-butadiene copolymerized latex, and the like, but is not particularly limited to the above.

For the adhesive treatment of the organic fiber cords, particularly the PET cords, it is preferable that the above-described three kinds of (A), (B), and (C) components are used as a one bath treatment liquid and a common RFL resin is used as a two-bath treatment liquid. Alternatively, the treatment can also be performed by only one bath using a mixture of the above-described (A), (B), (C), and (D) components. With regard to these components, it is preferable that the (A) component is 2 to 75% of the dry weight of an adhesive composition, the (B) component is 15 to 87% of the dry weight of an adhesive composition, the (C) component is 11 to 70% of the dry weight of an adhesive composition, and the (D) component is 20% or less of the dry weight of adhesive composition, in terms of dry weight ratio.

On the other hand, from the viewpoint of environmental protection, a resorcinol and formalin-free dip treatment liquid is preferably used as the adhesive composition of the organic fiber cords. Such a dip treatment liquid includes, for example, compositions containing rubber latex (a) having unsaturated dienes and one or more compounds (b) selected from compounds having a skeleton structure containing polyether and containing an amine functional group, compounds having an acrylamide structure, polypeptide, polylysine, and carbodiimide. Such a dip treatment liquid includes, for example, compositions further containing, in addition to the above-described rubber latex (a) having unsaturated dienes and the compound (b), one or more selected from water-based compounds having a (thermally dissociable blocked) isocyanate group (c), polyphenol (d), and a polyvalent metal salts (e).

In addition thereto, the resorcinol and formalin-free dip treatment liquid also includes compositions containing polyphenols (I) and aldehydes (II). Such compositions may further contain, in addition to polyphenols (I) and aldehydes (II), any of an isocyanate compound (III) and rubber latex (IV).

Due to the fact that the adhesive composition performing the adhesive treatment, i.e., performing coating, of the above-described organic fiber cords contains polyphenols (I) and aldehydes (II), satisfactory adhesiveness can be exhibited even when resorcinol is not used considering a burden on the environment.

[Polyphenols (I)]

Due to the fact that the above-described adhesive composition contains polyphenols (I) as a resin component, the adhesiveness to the organic fiber cords can be enhanced. Herein, the polyphenols (I) are typically water-soluble polyphenols, and are not particularly limited insofar as it is a polyphenol other than resorcin (resorcinol). In the polyphenols (I), the number of aromatic rings or the number of hydroxyl groups can be selected as appropriate.

From the viewpoint of realizing more excellent adhesiveness, the above-described polyphenols (I) preferably have two or more hydroxyl groups and more preferably have three or more hydroxyl groups. Due to the fact that the above-described polyphenols have three or more hydroxyl groups, polyphenols or polyphenol condensates are dissolved in the adhesive composition (dip treatment liquid) containing moisture. Thus, the polyphenols can be evenly distributed into the adhesive composition, and therefore more excellent adhesiveness can be realized. Further, when the polyphenols (I) are polyphenols containing a plurality, i.e., two or more, of aromatic rings, the aromatic rings have two or three hydroxyl groups present at the ortho-position, the meta-position, or the para-position.

As the above-described polyphenols (I), those described as a polyphenol compound in WO 2022/130879 can be used, for example. These polyphenols (I) may be used alone or in combination of two or more types thereof.

[Aldehydes (II)]

Due to the fact that the above-described adhesive composition contains aldehydes (II) as a resin component in addition to the polyphenols (I) described above, high adhesiveness can be realized together with the polyphenols (I) described above. Herein, the aldehydes (II) are not particularly limited and can be selected as appropriate according to the required performance. In this specification, the aldehydes (II) also include derivatives of aldehydes originating from aldehydes.

The above-described aldehydes (II) include, for example, monoaldehydes, such as formaldehyde, acetaldehyde, butyraldehyde, acrolein, propionaldehyde, chloral, butyraldehyde, caproaldehyde, and allylaldehyde, or aliphatic dialdehydes, such as glyoxal, malonaldehyde, succinaldehyde, glutaraldehyde, and adipaldehyde, aldehydes having aromatic rings, dialdehyde starches, and the like. These aldehydes (II) may be used alone or in combination of two or more types thereof.

The above-described aldehydes (II) are preferably aldehydes having aromatic rings or preferably contain aldehydes having aromatic rings. This is because more excellent adhesiveness can be obtained. The above-described aldehydes (II) preferably do not contain formaldehyde. Herein, the "not containing formaldehyde " means that the formaldehyde content is less than 0.5 mass% in the total mass of the aldehydes, for example.

It is preferable in the above-described adhesive composition that the polyphenols (I) and the aldehydes (II) are in a condensed state and that the mass ratio between the polyphenols and the aldehydes having aromatic rings (Content of aldehydes having aromatic rings/Content of polyphenols) is 0.1 or more and 3 or less. This is because, in this case, the hardness and the adhesiveness of the resin, which is a product of a condensation reaction occurring between the polyphenols and the aldehydes having aromatic rings, become more suitable. From a similar viewpoint, the mass ratio between the polyphenols and the aldehydes having aromatic rings (Content of aldehydes having aromatic rings/Content of polyphenols) in the above-described adhesive composition is more preferably 0.25 or more and more preferably 2.5 or less.

The above-described mass ratio is the mass of dry matter (solid content ratio).

The total content of the polyphenols (I) and the aldehydes (II) in the above-described adhesive composition is preferably 3 to 30% by mass. This is because, in this case, more excellent adhesiveness can be ensured without deteriorating workability and the like. From a similar viewpoint, the total content of the polyphenols (I) and the aldehydes (II) in the above-described adhesive composition is more preferably 5% by mass or more and more preferably 25% by mass or less.

The above-described total content is the mass of dry matter (solid content ratio).

[Isocyanate compound (III)]

The above-described adhesive composition preferably further contains an isocyanate compound (III) in addition to the polyphenols (I) and the aldehydes (II) described above. In this case, the adhesiveness of the adhesive composition can be further enhanced by the synergistic effect of the polyphenols (I) and the aldehydes (II).

Herein, the isocyanate compound (III) is a compound having the action of promoting the adhesion to a resin material that is an adherend of the adhesive composition, e.g., a phenol/aldehyde resin obtained by condensing the polyphenols (I) and the aldehydes (II), and is a compound having an isocyanate group as a polar functional group. These isocyanate compounds (III) may be used alone or in combination of two or more types thereof.

The above-described isocyanate compounds (III) are not particularly limited, and a (blocked) isocyanate group-containing aromatic compound is preferably contained from the viewpoint of further improving the adhesiveness. Due to the fact that the above-described adhesive composition contains the (blocked) isocyanate group-containing aromatic compound, the (blocked) isocyanate group-containing aromatic compound is distributed at a position near the interface between the organic fiber cords and the adhesive composition. As a result, a further adhesiveness promotion effect is obtained, and this effect can further increase the adhesiveness of the adhesive composition to the organic fiber cords.

For the above-described (blocked) isocyanate group-containing aromatic compound, those described in Patent Application No. JP 2023-040157 and those described in Patent Application No. JP 2023-030762 can be used.

In the above-described adhesive composition, the content of the isocyanate compound (III) is not particularly limited, and is preferably 5 to 65% by mass from the viewpoint of more reliably ensuring excellent adhesiveness. From a similar viewpoint, the content of the isocyanate compound (III) in the above-described adhesive composition is more preferably 10% by mass or more and more preferably 45% by mass or less.

The above-described content is the mass of dry matter (solid content ratio).

[Rubber latex (IV)]

The above-described adhesive composition can further substantially contain the rubber latex (IV) in addition to the polyphenols (I), the aldehydes (II), and the isocyanate compound (III) described above. This allows the adhesive composition to further enhance the adhesiveness to a rubber member.

Herein, the rubber latex (IV) includes, but is not particularly limited to, not only natural rubber (NR) but synthetic rubbers, such as polyisoprene rubber (IR), styrene-butadiene copolymer rubber (SBR), polybutadiene rubber (BR), ethylene-propylene-diene rubber (EPDM), chloroprene rubber (CR), halogenated butyl rubber, acrylonitrile-butadiene rubber (NBR), or vinylpyridine-styrene-butadiene copolymer rubber (Vp). These rubber latexes (IV) may be used alone or in combination of two or more types thereof.

In preparing the adhesive composition containing the above-described rubber latex (IV), the rubber latex (IV) is preferably mixed with the phenols (I) and the aldehydes (II) before the isocyanate compound (III) is compounded.

In the above-described adhesive composition, the content of the rubber latex (IV) is preferably 20% by mass or more and more preferably 25% by mass or more, and is preferably 70% by mass or less and more preferably 60% by mass or less.

A method for manufacturing the above-described adhesive composition includes, but is not particularly limited to, for example, a method including mixing raw materials, such as the polyphenols (I), the aldehydes (II), and the rubber latex (IV), and maturing the mixture, a method for mixing the polyphenols (I) and the aldehydes (II) and maturing the mixture, and then further adding the rubber latex (IV), and maturing the mixture, and the like. When the raw materials contain the isocyanate compound (III), the method for manufacturing the above-described adhesive composition may be a method including adding the rubber latex (IV), maturing the mixture, and then adding the isocyanate compound (III).

The belt-reinforcing layer 3 is preferably formed by applying the adhesive treatment to the above-described organic fiber cords, coating the resultant organic fiber cords with coating rubber to form a narrow strip, and then successively winding the strip on the belt layer 2 in a spiral shape in the tire circumferential direction.

In the example illustrated in FIG. 1, the belt-reinforcing layer 3 contains, outside in the tire radial direction of the belt layer 2, a so-called cap layer 3A arranged to cover the entirety of the belt layer 2 in the tire width direction and so-called layered layers 3B arranged forming a pair to cover only both end parts of the belt layer 2 in the tire width direction, but is not limited to such a configuration. For example, the belt-reinforcing layer 3 containing only one cap layer 3A may be acceptable, the belt-reinforcing layer 3 containing the pair of layered layers 3B may be acceptable, or the belt-reinforcing layer 3 containing a combination of one pair or two or more pairs of cap layers 3A and one pair or two or more pairs of layered layers 3B may be acceptable.

In the tire 10 illustrated in the figure, the carcass 1 includes one carcass ply. The carcass ply is a member forming the skeleton of the tire and one or more carcass plies, for example, one to three carcass plies, are arranged. In the tire 10 illustrated in the figure, a bead core 4 is embedded in each of the pair of bead parts 13, and the carcass ply 1 is retained around the bead cores 4 while being folded back from the inside to the outside of the tire, but a method for retaining the carcass ply 1 is not limited thereto. As reinforcing cords of the carcass ply 1, organic fiber cords can be used, including polyesters such as polyethylene naphthalate (PEN) and polyethylene terephthalate (PET), nylon, and semi-aromatic fibers, for example.

In the tire 10 illustrated in the figure, the belt layer 2 containing two belts 2a and 2b having the cord direction inclined with respect to the tire circumferential direction is arranged outside in the tire radial direction of the carcass 1. One or more belt layers 2, for example, two to four belt layers 2, are arranged. When two or more belt layers 2 are arranged, the belt layers 2 are arranged such that the directions of the reinforcing cords intersect with each other between the layers in at least one part. As the reinforcing cords in the belt layer 2, organic fiber cords can also be used besides steel cords.

Although not illustrated in the figure, in the tire of the present invention, a bead filler having a tapered cross-section shape can be arranged outside in the tire radial direction of the bead core 4, and, usually, an inner liner containing a

rubber material or a resin material can be arranged on the innermost layer of the tire. The tire of the present invention is preferably a pneumatic tire, and, as gas to be filled into the tire, not only common air or air with an adjusted oxygen partial pressure but inert gas, such as nitrogen, argon, and helium, can be used.

EXAMPLES

Hereinafter, the present invention is described in more detail with respect to specific Examples.

(Example 1)

A passenger car tire having a tire size of 195/65R15 structured as illustrated in FIG. 1 was produced. This tire sequentially included, with a carcass containing one carcass ply as a skeleton, two belt layers (material: steel) arranged such that the direction of cords intersect with each other at an angle of ±66° with respect to the center plane and two belt-reinforcing layers, outside in the tire radial direction of the carcass in a tread part. The two belt-reinforcing layers contained a cap layer arranged to cover the entirety of the belt layer in the tire width direction and layered layers arranged forming a pair to cover both end parts of the belt layer in the tire width direction.

The belt-reinforcing layer was formed by coating, with coating rubber, reinforcing cords aligned such that the direction of the cords was substantially aligned to the tire circumferential direction. The formulation of a rubber composition used for the coating rubber of the belt-reinforcing layer is shown in Table 1 below. The conditions of the reinforcing cords and the coating rubber in the belt-reinforcing layer are shown in Table 2 below.

Passenger car tires of Reference Example, Comparative Examples 1 and 2, and Examples 2 and 3 were produced in the same manner as Example 1, except that the conditions of the reinforcing cords and the coating rubber in the belt-reinforcing layer were changed as shown in Table 2 below.

[Table 1]

<table>
<tr><td colspan="3">Rubber type</td><td colspan="2">A</td><td>B</td></tr>
<tr><td rowspan="11">Compounded components (part(s) by mass)</td><td colspan="2">NR*1</td><td colspan="2">68</td><td>70</td></tr>
<tr><td colspan="2">SBR (1)*2</td><td colspan="2">-</td><td>30</td></tr>
<tr><td rowspan="2">SBR (2)*3</td><td>SBR component</td><td rowspan="2">44</td><td>32</td><td rowspan="2">-</td></tr>
<tr><td>Oil content in polymer</td><td>12</td></tr>
<tr><td colspan="2">CB (1)*4</td><td colspan="2">-</td><td>45</td></tr>
<tr><td colspan="2">CB (2)*5</td><td colspan="2">45</td><td>-</td></tr>
<tr><td colspan="2">Oil</td><td colspan="2">-</td><td>-</td></tr>
<tr><td colspan="2">Zinc white*6</td><td colspan="2">4</td><td>4</td></tr>
<tr><td colspan="2">Anti-aging agent*7</td><td colspan="2">0.7</td><td>0.7</td></tr>
<tr><td colspan="2">Sulfur*8</td><td colspan="2">2.9</td><td>2.9</td></tr>
<tr><td colspan="2">Vulcanization accelerator*9</td><td colspan="2">1</td><td>0.8</td></tr>
<tr><td colspan="6">*1) NR: Natural rubber, TSR #20<br>*2) SBR (1): Styrene butadiene rubber, solution polymerization SBR, non-oil-extended (JSR 1500)<br>*3) SBR (2): Styrene butadiene rubber, emulsion polymerization SBR, 27.3% oil extended (JSR 1778)<br>*4) CB (1): GPF grade carbon black, $N_2SA$ (nitrogen adsorption specific surface area) of 28 $m^2/g$, DBP absorption amount of 89 ml/100 g<br>*5) CB (2): HAF grade carbon black, $N_2SA$ (nitrogen adsorption specific surface area) of 71 $m^2/g$, DBP absorption amount of 103 ml/100 g<br>*6) Zinc white: Zinc oxide grade 3 manufactured by HAKUSUI TECH Co., Ltd.<br>*7) Anti-aging agent: Nonflex RD manufactured by Seiko Chemical Co., Ltd.<br>*8) Sulfur: SULFUR (5% OIL-TREATED) manufactured by Tanaka Ai Co., Ltd.<br>*9) Vulcanization accelerator: SANCELER NS-G, SANCELER DM-TG</td></tr>
</table>

Each test tire was evaluated for rolling resistance and pass-by noise as follows. These results are shown in Table 2 below.

(Evaluation of rolling resistance)

Each test tire was measured for the rolling resistance using a rolling resistance testing machine in accordance with SAE J 1269. The results are indicated by an index with the rolling resistance of the reference example set to 100. The smaller the numerical value, the lower the rolling resistance and the better the results.

(Evaluation of pass-by noise)

Each test tire was measured for the pass-by noise (dB) in accordance with the international standard (ECER117). The results are indicated by an index with the pass-by noise of the reference example set to 100. The smaller the numerical value, the lower the pass-by noise and the better the results.

[Table 2]

| | | | Ref. Ex. | Comp. Ex. 1 | Comp. Ex. 2 | Ex. 1 | Ex. 2 | Ex. 3 |
|---|---|---|---|---|---|---|---|---|
| Belt-reinforcing layer | Reinforcing cord | Organic fiber type | Nylon | PET | PET | PET | PET | PET |
| | | Cord fineness | 1400dtex/2 | 1100dtex/2 | 1100dtex/2 | 1100dtex/2 | 1100dtex/2 | 1670dtex |
| | | Number of twists | 26 × 26 | 25 × 25 | 25 × 25 | 25 × 25 | 39 × 39 | 39 × 0 |
| | | D[*10] (mm) | 0.54 | 0.47 | 0.47 | 0.47 | 0.50 | 0.28 |
| | | Cord stiffness sc[*11] (mN/(dtex·%)) | 3.5 | 5.2 | 5.2 | 5.2 | 4.7 | 2.8 |
| | | N[*12] (cords/100 mm) | 100 | 100 | 100 | 70 | 80 | 100 |
| | | Circumferential stiffness S[*13] | 350 | 522 | 522 | 365 | 376 | 280 |
| | Coating rubber | Rubber type | A | A | B | B | B | B |
| | | Storage elastic modulus E' (24°C)[*14] (MPa) | 7.0 | 7.0 | 5.3 | 5.3 | 5.3 | 5.3 |
| | | tanδ (24°C)[*15] | 0.178 | 0.178 | 0.104 | 0.104 | 0.104 | 0.104 |
| | | tanδ (60°C)[*16] | 0.135 | 0.135 | 0.067 | 0.067 | 0.067 | 0.067 |
| | | Cross-sectional area[*17] ($mm^2$) | 31.1 | 29.7 | 29.7 | 34.9 | 34.3 | 21.8 |
| | | Loss index L [*18] | 5.5 | 5.3 | 3.1 | 3.6 | 3.6 | 2.3 |
| Tire evaluation | | Rolling resistance (index) | 100 | 97 | 98 | 99 | 99 | 99 |
| | | Pass-by noise (index) | 100 | 102 | 103 | 100 | 100 | 99 |

*10) Diameter D (mm) of a circumcircle of reinforcing cord.

*11) The value (mN/(dtex·%)) of the cord stiffness sc of the reinforcing cords in the belt-reinforcing layer measured under conditions of a temperature of 24°C and humidity of 55%.

*12) Number N of reinforcing cords embedded in the belt-reinforcing layer (cords/100 mm).

*13) The value of the circumferential stiffness S per unit width of 100 mm of the belt-reinforcing layer defined by Equation (1) below.

$S = sc \times N$ (1), wherein

sc is the cord stiffness (mN/(dtex·%)) of the reinforcing cords in the belt-reinforcing layer under the conditions of a temperature of 24°C and humidity of 55%, and

N is the number (cords/100 mm) of the reinforcing cords embedded in the belt-reinforcing layer.

14) The value (MPa) of the storage elastic modulus E' (24°C) of the coating rubber measured under the conditions of a temperature of 24°C, an amplitude ±1%, and a frequency 52 Hz.

*15) The value of the loss tangent tan δ (24°C) of the coating rubber measured under the conditions of a temperature of 24°C, initial strain of 6%, an amplitude of ±1%, and a frequency of 52 Hz.

*16) The value of the loss tangent tan δ (60°C) of the coating rubber measured under the conditions of a temperature of 60°C, initial strain of 1.5%, an amplitude of ±1%, and a frequency of 52 Hz.

*17) The cross-sectional area ($mm^2$) of the coating rubber contained per unit width of 100 mm of the belt-reinforcing layer.

*18) The value of the loss index L of the coating rubber contained per unit width of

From the results above, it is clear that, according to the test tires of Examples, even when the rolling resistance is

reduced using the PET cords having elasticity higher than that of nylon, the worsening of the pass-by noise in running is suppressed.

DESCRIPTION OF SYMBOLS

| | |
|---|---|
| 1 | carcass |
| 2 | belt layer |
| 2a, 2b | belt |
| 3 | belt-reinforcing layer |
| 3A | cap layer |
| 3B | layered layer |
| 4 | bead core |
| 10 | tire |
| 11 | tread part |
| 12 | sidewall part |
| 13 | bead part |
| 31 | reinforcing cord |
| 32 | coating rubber |

**Claims**

**1.** A tire comprising: in a tread part,

at least one belt layer; and
at least one belt-reinforcing layer arranged outside in a tire radial direction of the belt layer, wherein
the belt-reinforcing layer is formed by coating, with coating rubber, reinforcing cords aligned such that a direction of the cords is substantially aligned to a tire circumferential direction and has a value of circumferential stiffness S per unit width of 100 mm of the belt-reinforcing layer defined by Equation (1) below of 250 or more and 400 or less, and
the coating rubber has a storage elastic modulus E' measured under conditions of a temperature of 24°C, an amplitude of ±1%, and a frequency of 52 Hz of 6.0 MPa or less,

$$S = sc \times N \qquad (1),$$

wherein
sc is cord stiffness (mN/(dtex·%)) of the reinforcing cords in the belt-reinforcing layer under conditions of a temperature of 24°C and humidity of 55%, and
N is a number (cords/100 mm) of the reinforcing cords embedded in the belt-reinforcing layer.

**2.** The tire according to claim 1, wherein a value of a loss index L of the coating rubber contained per unit width of 100 mm of the belt-reinforcing layer defined by Equation (2) below is 4.00 or less,

$$L = \tan\delta \times ((100 \times D) - \pi(D/2)^2 \times N) \qquad (2),$$

wherein

tan δ is a value of a loss tangent of the coating rubber measured under conditions of a temperature of 24°C, initial strain of 6%, an amplitude of ± 1%, and a frequency of 52 Hz,
D is a diameter (mm) of a circumcircle of the reinforcing cord, and
N is the number (cords/100 mm) of the reinforcing cords embedded in the belt-reinforcing layer.

**3.** The tire according to claim 1, wherein a rubber composition used for the coating rubber contains natural rubber and styrene butadiene rubber as a rubber component and contains the natural rubber in a proportion of 70 parts by mass or more in 100 parts by mass of the rubber component.

4. The tire according to claim 3, wherein the styrene butadiene rubber is non-oil-extended styrene butadiene rubber.

5. The tire according to claim 1, wherein

a rubber composition used for the coating rubber contains carbon black in a proportion of 30 to 60 parts by mass based on 100 parts by mass of the rubber component, and
the carbon black has a nitrogen adsorption specific surface area ($N_2SA$) of 40 $m^2/g$ or less.

6. The tire according to claim 1, wherein a rubber composition used for the coating rubber does not contain an oil content derived from a polymer.

7. The tire according to claim 1, wherein an oil content in a rubber composition used for the coating rubber is 0.2% by mass or less.

8. The tire according to claim 1, wherein the reinforcing cord contains polyethylene terephthalate fibers.

FIG. 1

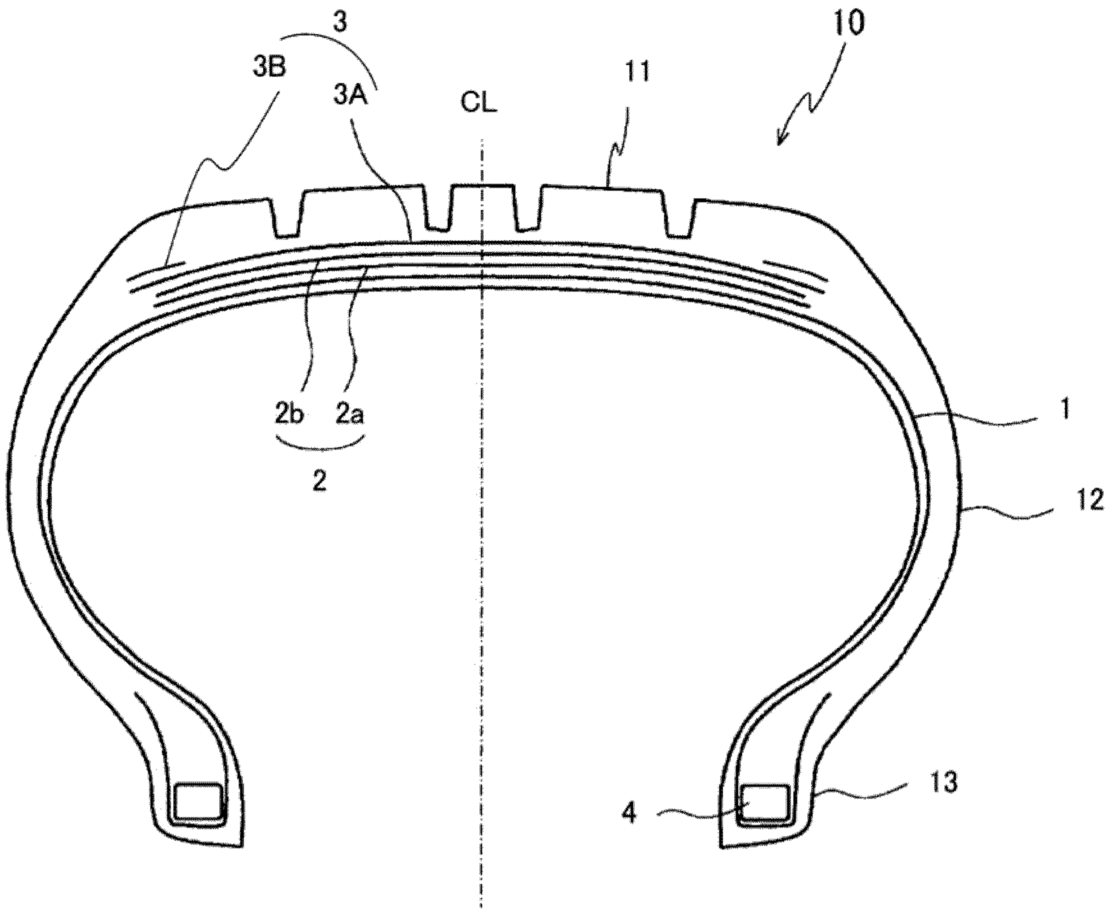


FIG. 2

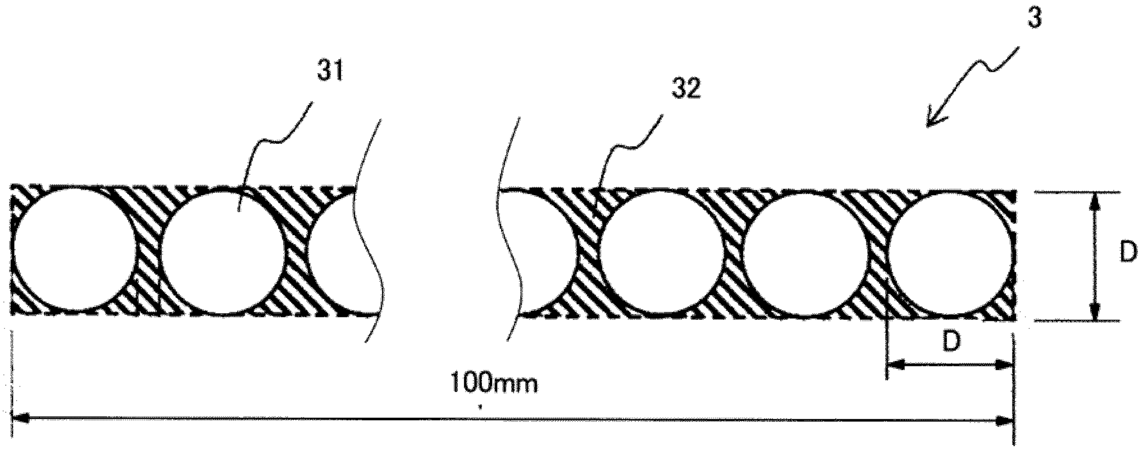

FIG. 3

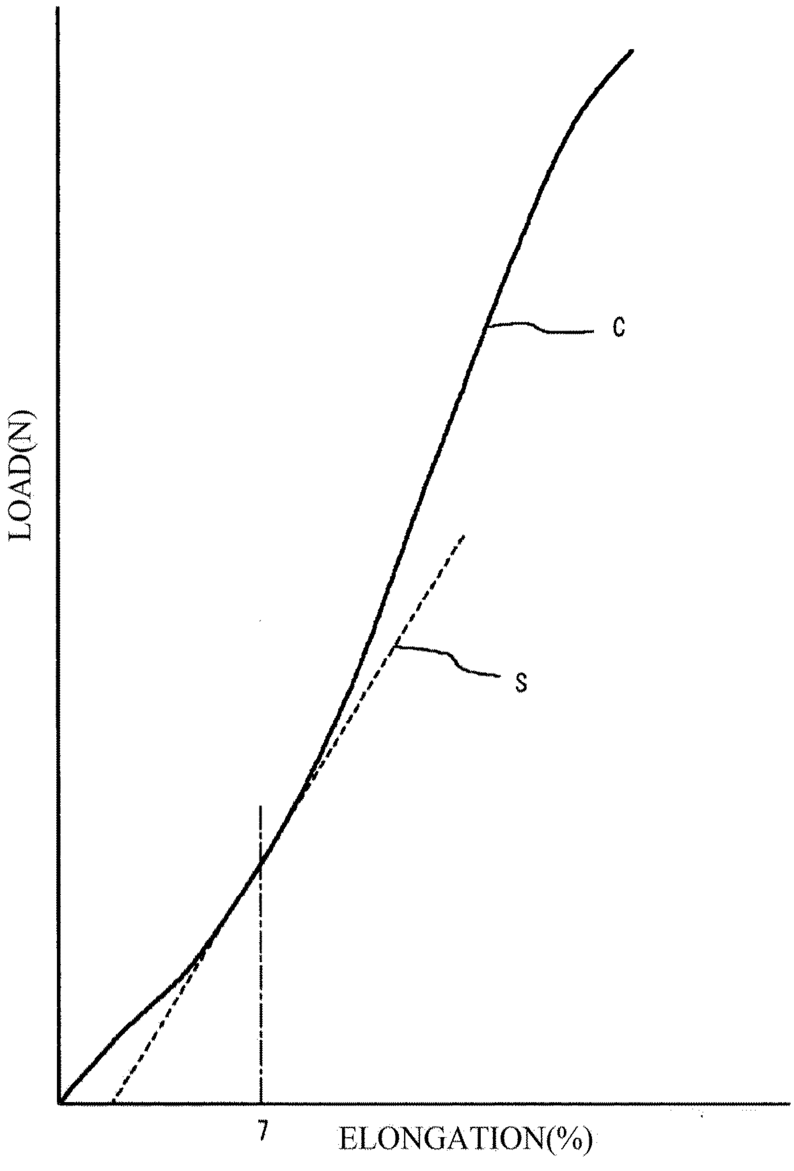

## INTERNATIONAL SEARCH REPORT

International application No.
**PCT/JP2023/044314**

### A. CLASSIFICATION OF SUBJECT MATTER

***B60C 9/22***(2006.01)i; ***B60C 1/00***(2006.01)i; ***B60C 9/20***(2006.01)i; ***C08K 3/04***(2006.01)i; ***C08L 7/00***(2006.01)i; ***C08L 9/06***(2006.01)i
FI: B60C9/22 C; B60C1/00 C; B60C9/20 G; B60C9/22 B; B60C9/22 D; C08K3/04; C08L7/00; C08L9/06

According to International Patent Classification (IPC) or to both national classification and IPC

### B. FIELDS SEARCHED

Minimum documentation searched (classification system followed by classification symbols)

B60C1/00-19/12; C08K3/00-13/08; C08L1/00-101/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2021-24510 A (THE YOKOHAMA RUBBER CO., LTD.) 22 February 2021 (2021-02-22) entire text | 1-8 |
| A | JP 2021-24509 A (THE YOKOHAMA RUBBER CO., LTD.) 22 February 2021 (2021-02-22) entire text | 1-8 |
| A | JP 2014-65438 A (BRIDGESTONE CORPORATION) 17 April 2014 (2014-04-17) entire text | 1-8 |
| A | JP 2007-326436 A (THE YOKOHAMA RUBBER CO., LTD.) 20 December 2007 (2007-12-20) entire text | 1-8 |
| A | JP 2007-326439 A (THE YOKOHAMA RUBBER CO., LTD.) 20 December 2007 (2007-12-20) entire text | 1-8 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 February 2024** | **12 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
PCT/JP2023/044314

C. DOCUMENTS CONSIDERED TO BE RELEVANT

| Category* | Citation of document, with indication, where appropriate, of the relevant passages | Relevant to claim No. |
|---|---|---|
| A | JP 2009-73204 A (TOYO TIRE & RUBBER CO., LTD.) 09 April 2009 (2009-04-09) entire text | 1-8 |
| A | JP 2008-6890 A (THE YOKOHAMA RUBBER CO., LTD.) 17 January 2008 (2008-01-17) entire text | 1-8 |

Form PCT/ISA/210 (second sheet) (July 2022)

**INTERNATIONAL SEARCH REPORT**
**Information on patent family members**

International application No.
**PCT/JP2023/044314**

| Patent document cited in search report | Publication date (day/month/year) | Patent family member(s) | Publication date (day/month/year) |
|---|---|---|---|
| JP 2021-24510 A | 22 February 2021 | US 2022/0266632 A1<br>entire document<br>WO 2021/024951 A1<br>CN 114206633 A | |
| JP 2021-24509 A | 22 February 2021 | (Family: none) | |
| JP 2014-65438 A | 17 April 2014 | (Family: none) | |
| JP 2007-326436 A | 20 December 2007 | (Family: none) | |
| JP 2007-326439 A | 20 December 2007 | (Family: none) | |
| JP 2009-73204 A | 09 April 2009 | (Family: none) | |
| JP 2008-6890 A | 17 January 2008 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005112065 A
- JP 4397207 B
- WO 2022130879 A
- JP 2023040157 A
- JP 2023030762 A